# EUROPÄISCHE PATENTSCHRIFT

(11) **EP 0 875 688 B1**
(45) Veröffentlichungstag und Bekanntmachung des Hinweises auf die Patenterteilung: **05.03.2003**
(21) Anmeldenummer: 98107537.7
(22) Anmeldetag: 24.04.1998
(51) Int. Cl.: F16D 3/26

(54) **Kreuzgelenkverbindung zwischen einer Gelenkwelle und einer Ab- oder Antriebswelle eines Getriebes, insbesondere eines Nutzfahrzeuges**
Universal joint for the joining of an articulated shaft and an output or a drive shaft of a transmission particularly for a load-carrying vehicle
Jonction pour une articulation en joint de cardan entre un arbre articulé et un arbre de sortie ou un arbre d'une transmission en particulier pour camion

(30) Priorität: 03.05.1997 DE 19718896
(43) Veröffentlichungstag der Anmeldung: 04.11.1998
(73) Patentinhaber: MAN Nutzfahrzeuge Aktiengesellschaft, 80976 München (DE)
(72) Erfinder: Heuer, Fritz, Dipl.-Ing. (FH), 85238 Petershausen (DE)

(56) Entgegenhaltungen:
- EP-A- 0 406 085
- DE-A- 3 527 053
- US-A- 5 135 587

## Beschreibung

Die Erfindung betrifft eine Kreuzgelenkverbindung mit Merkmalen entsprechend dem Oberbegriff des Anspruches 1.

Die Erfindung geht aus von in Nutzfahrzeugen serienmäßig eingebauten Kreuzgelenkverbindungen zwischen einer Gelenkwelle und einem Schaltgetriebe einerseits sowie einem Achsdifferentialgetriebe oder Verteilergetriebe andererseits. Charakteristisch für solche bekannte Kreuzgelenkverbindungen ist, daß die getriebeseitigen Gelenkgabeln jeweils über einen massiven, relativ durchmessergroßen und stirnseitig kreuzverzahnten Flansch an einem Anschlußstück mit einem ebensolchen Anschlußflansch angeschlossen sind, welches Anschlußstück wiederum am Endbereich der Ab- bzw. Antriebswelle des Getriebes axial- und verdrehungsgesichert angeschlossen ist. Gerade diese Flanschverbindung und das dabei notwendige Anschlußstück als Zwischenglied macht die bekannte Kreuzgelenkverbindung insgesamt gesehen vergleichsweise teuer in der Herstellung und auch schwer.

Darüber hinaus ist es aus der EP 0 512 743 A1 und der EP 0 320 229 A1 bekannt, die beiden zur Befestigung eines Zapfens des Kreuzzapfen-Zwischengliedes dienenden Lagerschilde der getriebeseitigen Gelenkkabeln zweigeteilt herzustellen, wobei auf jedem der beiden, an der Gelenkgabel angeformten und an dieser für Anschluß vorbereiteten Böcke ein separat für Anschluß vorbereiteter Lagerdeckel mittels Schrauben befestigbar ist.

Der Erfindung liegt die Aufgabe zugrunde, eine Kreuzgelenkverbindung der gattungsgemäßen Art so zu verbessern, daß diese weniger Bauraum beansprucht, gewichtmäßig leichter wird, einfacher und billiger herzustellen ist und außerdem ein problemloses Montieren sowie Demontieren ermöglicht.

Diese Aufgabe wird erfindungsgemäß mit einer Kreuzgelenkverbindung mit den im Anspruch 1 gekennzeichneten Merkmalen gelöst.

Vorteilhafte Ausgestaltungen und Weiterbildungen dieser Lösung sind in den Unteransprüchen angegeben.

Die erfindungsgemäß ausgestaltete getriebeseitige Gelenkgabel ist im Vergleich zu den eingangs geschilderten Flanschlösungen wesentlich leichter sowie einfacher und billiger herstellbar und in vorteilhafter Weise auch direkt, das heißt ohne beflanschtes Zwischenglied wie bisher, am Endbereich der getriebeseitigen Ab- bzw. Antriebswelle zu befestigen, dies zudem in ebenfalls relativ einfacher Art und Weise. Besonders vorteilhaft ist dies in Verbindung mit der materialmäßigen und formmäßigen Ausgestaltung der getriebeseitigen Gelenkgabel im Hinblick auf die Möglichkeit, ihre beiden Lagerschilde im Bereich des jeweiligen Lagerauges durch Bruchtrennen in einen Bock und Lagerdeckel teilen zu können. Dieses bis dato nur in Verbindung mit Pleuelstangen von Verbrennungsmotoren bekannt gewordene Bruchtrennen macht es möglich, daß jeder Lagerdeckel bei Montage der Gelenkverbindung über die beiderseitigen Bruchflächenstrukturen in absolut definierter und reproduzierbarer Weise formschlüssig am zugehörigen Bock anschließbar und an diesem so lagefixiert auch kraftschlüssig mittels zweier Schrauben befestigbar ist.

Insgesamt gesehen ergibt sich durch die erfindungsgemäße Gestaltung der getriebeseitigen Gelenkgabel eine erhebliche Kostenreduzierung sowie Montage- und Demontagevereinfachung bei der serienmäßigen Darstellung einer Gelenkverbindung zum Beispiel im Gelenkwellenstrang eines Lastkraftwagen zwischen dessen Schaltgetriebe und Achsdifferential- oder Verteilergetriebe.

Nachstehend ist die erfindungsgemäße Lösung anhand von in der Zeichnung dargestellten Ausführungsbeispielen noch näher beschrieben. In der Zeichnung zeigen:
- Fig. 1: einen schaltgetriebeseitigen Abschnitt einer Gelenkwellenverbindung gemäß der Erfindung in Seitenansicht und teilweise geschnitten,
- Fig. 2: die Gelenkwellenverbindung gemäß Fig. 1, wobei das Gelenk in einer um 90° rotatorisch verdrehten Lage dargestellt ist,
- Fig. 3: einen achsdifferentialseitigen Abschnitt einer Gelenkwellenverbindung gemäß der Erfindung in Seitenansicht und teilweise geschnitten,
- Fig. 4: die Gelenkwellenverbindung gemäß Fig. 3, wobei das Gelenk in einer um 90° rotatorisch gedrehten Lage dargestellt ist,
- Fig. 5: eine erfindungsgemäße Gelenkwellenverbindung in Explosionsdarstellung ihrer Teile, und
- Fig. 6: die Lagerung eines kreuzzapfenförmigen Zwischengliedes, eingebaut in eine erfindungsgemäße Kreuzgelenkverbindung, im Schnitt.

In den Figuren sind gleiche bzw. einander entsprechende Bauteile mit gleichen Bezugszeichen angezogen.

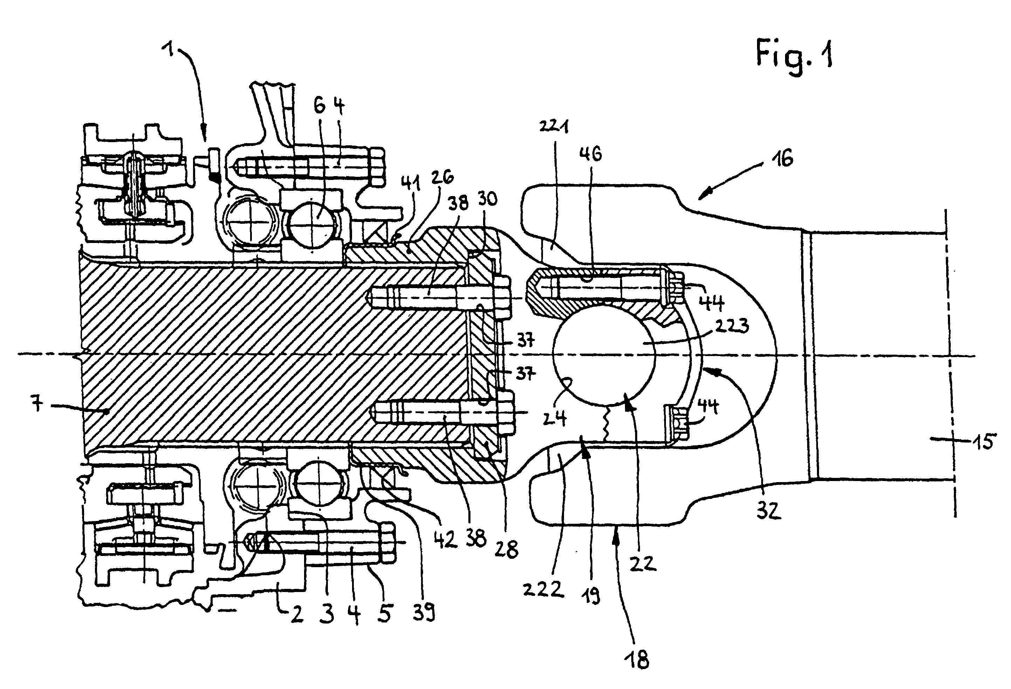

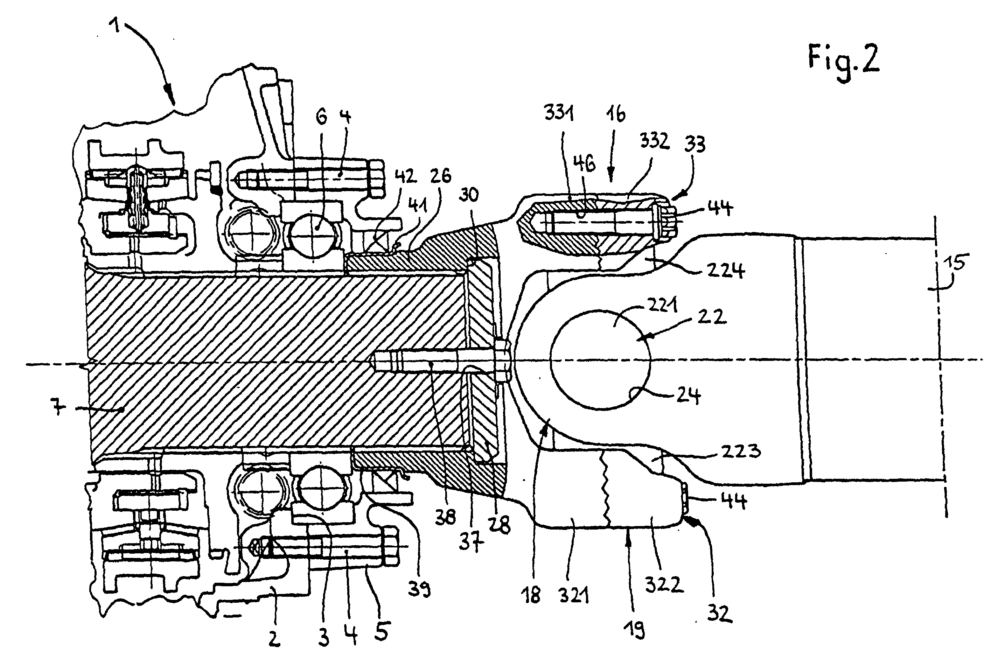

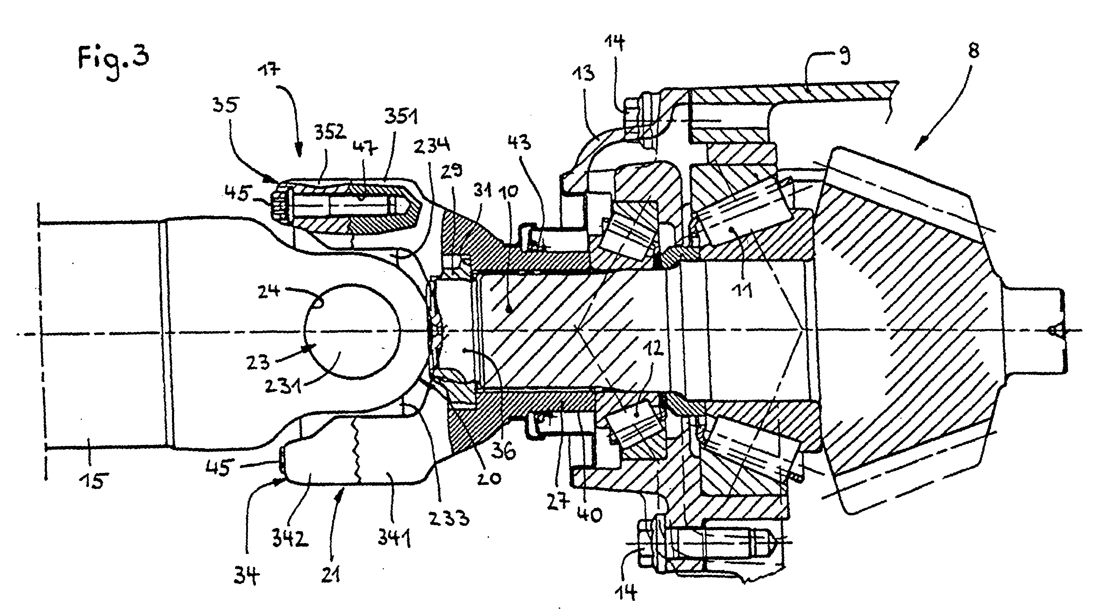

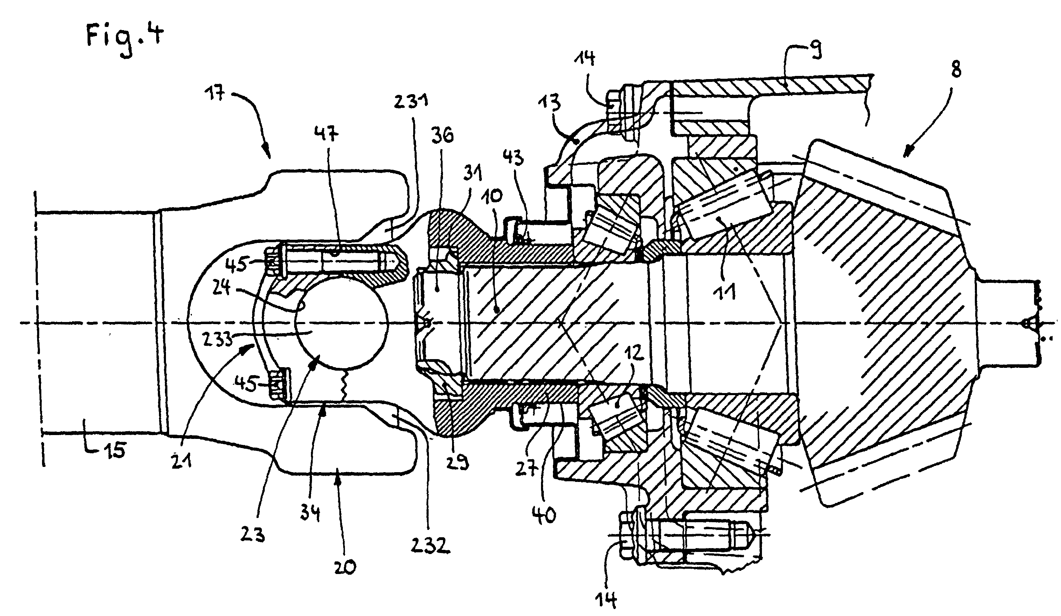

In der Zeichnung - dort in Fig. 1 und 2 - sind ein teilweise dargestelltes Getriebe, insbesondere Schalt- oder Automatikgetriebe eines Nutzfahrzeuges, mit 1 und dessen Gehäuse mit 2 bezeichnet. Ein dort axial fixiert zwischen einer gehäuseseitigen Schulter 3 und einem mittels Schrauben 4 befestigen Gehäusedeckel 5 eingebautes Wälzlager 6 dient zur Lagerung einer Abtriebswelle 7 des Getriebes 1. In den Fig. 3 und 4 der Zeichnung sind ein weiteres, teilweise dargestelltes Getriebe, zum Beispiel Achsdifferentialgetriebe oder Verteilergetriebe eines Nutzfahrzeuges, mit 8, dessen Gehäuse mit 9 und eingangsseitige Antriebswelle mit 10 bezeichnet. Ein erstes und zweites, jeweils axial fixiert im Gehäuse 8 eingebautes Wälzlager 11 bzw. 12 dient zur Lagerung der Antriebswelle 10. Das Wälzlager 12 ist in einen Gehäusedeckel 13, dort an einer Schulter axial nach innen abgestützt eingebaut. Der Gehäusedeckel 13 ist am Gehäuse 9 mittels Schrauben 14 befestigt.

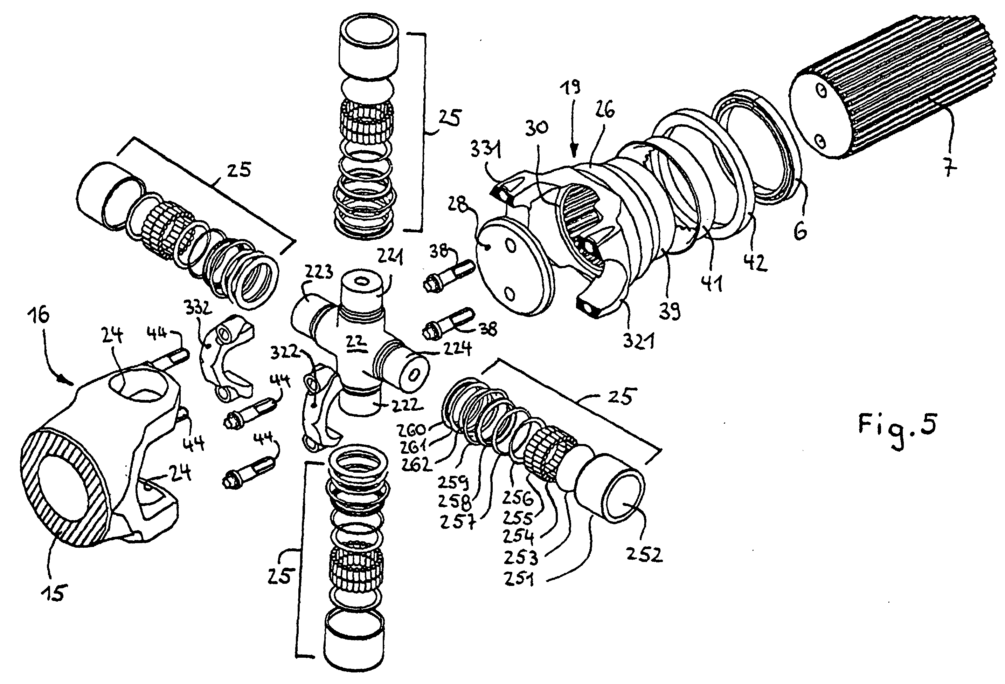

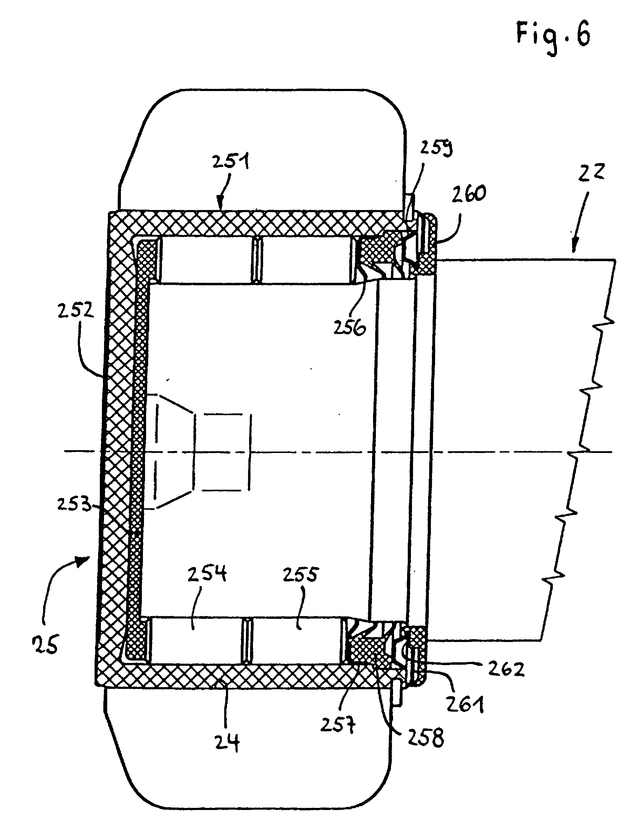

Zwischen den beiden Getrieben 1, 8 erstreckt sich eine Gelenkwelle 15. Diese ist an jedem ihrer beiden Enden über eine Kreuzgelenkverbindung 16 bzw. 17 mit der Abtriebswelle 7 des Getriebes 1 bzw. der Antriebswelle 10 des Getriebes 8 kardangelenkig verbunden. Jede dieser beiden Kreuzgelenkverbindungen 16 bzw. 17 besteht aus zwei Gelenkgabeln 18, 19 bzw. 20, 21 und einem Zwischenglied 22 bzw. 23, das jeweils zwei in zueinander senkrechten Achsen angeordnete Paare von Zapfen 221, 222, 223, 224 bzw. 231, 232, 233, 234 aufweist, auf denen die Gelenkgabeln 18, 19, 20, 21 über in deren Lageraugen 24 eingebaute Wälzlager 25 (Details hierzu siehe Fig. 5 und 6) schwenkbar gelagert sind.

Die Gelenkgabel 18 ist dabei an jenem, dem Getriebe 1 zugewandten Ende der Gelenkwelle 15 und die Gelenkgabel 20 an jenem, dem Getriebe 8 zugewandten Ende der Gelenkwelle 15, jeweils fest mit dieser verbunden, angeordnet.

Die jeweils andere - getriebeseitige - Gelenkgabel 19 bzw. 21 dagegen ist axial- und verdrehungsgesichert am Endbereich der Abtriebswelle 7 bzw. Antriebswelle 10 des Getriebes 1 bzw. 8 angeschlossen, und zwar in erfindungsgemäßer Weise wie nachfolgend dargelegt. Die getriebeseitige Gelenkgabel 19 bzw. 21 weist hierzu eine innen achsparallel längsverzahnte Nabe 26 bzw. 27 auf, mit der sie auf einem entsprechend keilverzahnten Endabschnitt der Ab- bzw. Antriebswelle 7 bzw. 10 des Getriebes 1 bzw. 8 verdrehungsgesichert aufgenommen ist und außerdem mit ihrem vorderen Ende gegen das die Ab- bzw. Antriebswelle 7 bzw. 10 lagernde Wälzlager 6 bzw. 12 axial abgestützt befestigt ist, und zwar unter Zuhilfenahme einer Druckplatte 28 bzw. 29, die an einer inneren Anlagefläche 30 bzw. 31 der Gelenkgabel 19 bzw. 21 gekontert anliegt und am Stimende der Ab- bzw. Antriebswelle 7 bzw. 10 angeschraubt ist. Diese Anlagefläche 30 bzw. 31 ist senkrecht stehend zur Rotationsachse an jenem Ende der Nabe 26 bzw. 27 ausgebildet, an der sich die jeweils beiden, bei Herstellung je Gelenkgabel 19 bzw. 21 an dieser mit angeformten Lagerschilde 32, 33 bzw. 34, 35 anschließen. Dabei kann die Druckplatte 28 bzw. 29 - wie im Fall gemäß Fig. 3 und 4 - nach Art einer Mutter mit einem stirnseitigen Druckflansch ausgebildet und zur Befestigung der Gelenkgabel 19 bzw. 21 auf ein am äußeren freien Ende der Ab- bzw. Antriebswelle 7 bzw. 10 koaxial angeordneten Gewindezapfen 36 aufgeschraubt und durch geeignete Mittel, zum Beispiel eine Kontermutter, einen Splint oder Sicherungsring, gegen unerwünschtes Lösen gesichert sein. Alternativ hierzu kann die Druckplatte 28 bzw. 29 - wie im Fall gemäß Fig. 1 und 2 - als runde, ebene Scheibe mit zwei außermittigen, vorzugsweise gleich weit vom Rotationszentrum entfernten Durchgangsbohrungen 37 ausgebildet sein. Zur Befestigung dieser Druckplatte sind Schrauben 38 vorgesehen, die die Durchgangsbohrungen 37 durchdringen und in im Stirnbereich der Ab- bzw. Antriebswelle 7 bzw. 10 ausgebildete Sackgewindebohrungen eingeschraubt sowie durch geeignete Mittel, wie Sicherungsbügel oder Sicherungsblech, gegen unerwünschtes Lösen gesichert sind.

Vorzugsweise wirkt die Nabe 26 bzw. 27 der Gelenkgabel 19 bzw. 21 mit einem rotationszylindrischen Außenflächenabschnitt 39 bzw. 40 entweder direkt - wie im Fall gemäß Fig. 3 und 4 - oder über ein dort fest angebautes, mitrotierendes Teil 41 - wie im Fall gemäß Fig. 1 und 2 - mit einem fest am Gehäuse 2 bzw. 9 bzw. Gehäusedeckel 5 bzw. 13 befestigten Dichtungselement 42 bzw. 43 zwecks Abdichtung des Getriebe-Innenraumes nach außen zusammen.

In Kombination mit der Nabe 26 bzw. 27 und ihrer Befestigung, wie weiter vorne bereits beschrieben, ist die getriebeseitige Gelenkgabel 19 bzw. 21 erfindungsgemäß aus einem solchen Material und mit solcher Formgebung hergestellt, daß jeder ihrer beiden Lagerschilde 32, 33 bzw. 34, 35 im Bereich des Lagerauges 24 durch Bruchtrennen in einen Bock 321, 331 bzw. 341, 351 und einen Lagerdeckel 322, 332 bzw. 342, 352 teilbar ist. Dieser Lagerdeckel ist später bei Montage der Gelenkverbindung über die beiderseitigen Bruchflächenstrukturen formschlüssig am zugehörigen Bock fixiert und dort mittels zweier Schrauben 44 bzw. 45 befestigbar. Vor ihrer Bruchtrennung werden in den beiden Lagerschilden 32, 33 bzw. 34, 35 jeder Gelenkgabel 19 bzw. 21 das Lagerauge 24 durch spanabhebende Bearbeitung hergestellt und außerdem jeweils zwei zueinander parallele, durchmessermäßig abgesetzte Sacklochbohrungen 46 bzw. 47 hergestellt und anschließend in deren innere Bohrungsabschnitte Gewinde eingeschnitten. Aus diesen Sacklochbohrungen 46 bzw. 47 ergeben sich nach dem Bruchtrennen der Lagerschilde in deren Lagerdeckeln 322, 332 bzw. 342, 352 Durchgangsbohrungen, durch die bei Montage des vierzapfigen Zwischengliedes 22 bzw. 23 nach Ansetzen des jeweiligen Lagerbügels an den zugehörigen Bock eine Schraube 44 bzw. 45 hindurchführbar und in den nach Bruchtrennen im Bock gegebenen Gewindebohrungsabschnitt einschraubbar ist.

Aus Fig. 5 und 6 ist beispielhaft der bauteilmäßige Aufbau eines Wälzlagers 25 ersichtlich, wie es auf einem der vier Zapfen 221, 222, 223, 224 bzw. 231, 232, 233, 234 eines Zwischengliedes 22 bzw. 23 angeordnet und in ein Lagerauge 24 eingebaut ist. Im einzelnen besteht ein solches Wälzlager 25 aus einem topfförmigen Lagerkäfig 251, einer an dessen Boden 252 abgestützten Distanzplatte 253, zwei Reihen von an letzterer axial abgestützter Lagernadeln 254, 255, mehreren Dichtungsringen 256, 257, 258, einem Federring 259 und einem Lagerdeckel 260 mit eingelegten Armierungsringen 261, 262. Ein solches Wälzlager 25 wird in einem Lagerauge 24 auf einem äußeren Endabschnitt eines Zapfens des vierzapfigen Zwischengliedes 22 bzw. 23 - wie aus Fig. 6 ersichtlich - montiert.

Die Montagefolge einer erfindungsgemäßen Gelenkwellenverbindung - hier der auf Seiten des Getriebes 1 gegebenen - ist nachfolgend anhand von Fig. 5 beschrieben. Zunächst wird dabei in die Lageraugen 24 der am Ende der Gelenkwelle 15 angeordneten Gelenkgabel 16 das Zwischenglied 22 mit seinen Zapfen 221, 222 eingeführt. Anschließend werden von außen her in die Lageraugen 24 auf die dortigen Zapfenendabschnitte die beiden Wälzlager 25 einmontiert, so, wie aus Fig. 6 ersichtlich. Auf Seite des Getriebes 1 wird die erfindungsgemäße Gelenkgabel 19 am Ende der Abtriebswelle 7 über die Druckplatte 28 mittels der Schrauben 38 befestigt.

Anschließend werden die beiden Lagerdeckel 322 und 332 von ihren zugehörigen Böcken 321 und 331 abgenommen, dann die Gelenkwelle 15 mit dem dort bereits vormontierten Zwischenglied 22 mit dessen Zapfen 223 und 224 in die bockseitigen Lageraugenhälften eingebracht und dann die Lagerdeckel 322 und 332 wieder an den Böcken mittels der Schrauben 44 befestigt. Anschließend werden auch hier in die Lageraugen 24 von außen her auf die Zapfenendabschnitte die Wälzlager 25, so, wie aus Fig. 6 ersichtlich, einmontiert.

## Patentansprüche

1. Kreuzgelenkverbindung zwischen einer Gelenkwelle (15) und einer in bzw. an einem Getriebegehäuse (2,9) durch ein axial fixiert eingebautes Wälzlager (6, 12) gelagerten Ab- oder Antriebswelle (7, 10) eines Getriebes (1, 8), insbesondere eines Nutzfahrzeuges, mit zwei Gelenkgabeln (18, 19; 20, 21) und einem Zwischenglied (22, 23), das zwei in zueinander senkrechten Achsen angeordnete Paare von Zapfen aufweist, auf denen die Gelenkgabeln über in deren Lageraugen (24) eingebaute Wälzlager (25) schwenkbar gelagert sind, wobei die eine - wellenseitige - Gelenkgabel (18, 20) am Ende der Gelenkwelle (15) angeordnet ist, die andere - getriebeseitige - Gelenkgabel (19, 21) dagegen axial- und verdrehungsgesichert am Endbereich der Ab- bzw. Antriebswelle (7, 10) des Getriebes angeschlossen ist,
eine innen achsparallel längsverzahnte Nabe (26, 27) mit angeformten Lagerschilden (32, 33; 34, 35) aufweist, und
mit ihrer Nabe (26, 27) auf dem entsprechend keilverzahnten Endabschnitt der Ab- bzw. Antriebswelle (7, 10) verdrehungsgesichert aufgenommen ist, **dadurch gekennzeichnet, daß** die Gelenkgabel (19, 21)
a) mit ihrer Nabe (26, 27) mittels einer an dieser gekonterten, am Stirnende der Ab- bzw. Antriebswelle (7, 10) angeschraubten Druckplatte (28, 29) gegen das die Ab- bzw. Antriebswelle (7, 10) lagernde Wälzlager (6, 12) axial abgestützt befestigt ist, und
b) aus einem solchen Material und mit solcher Formgebung hergestellt ist, daß jeder ihrer beiden Lagerschilde (32, 33 ; 34, 35) im Bereich des Lagerauges (24) durch Bruchtrennen in einen Bock (321, 331 ; 341, 351) und einen Lagerdeckel (322, 332 ; 342, 352) teilbar ist, der später bei Montage der Gelenkverbindung über die beiderseitigen Bruchflächenstrukturen formschlüssig fixiert und mittels zweier Schrauben (44, 45) am zugehörigen Bock befestigbar ist.

2. Kreuzgelenkverbindung nach Anspruch 1, **dadurch gekennzeichnet, daß** die Nabe (26, 27) der getriebeseitigen Gelenkgabel (19, 21) mit einem rotationszylindrischen Außenflächenabschnitt (39, 40) direkt oder über ein dort fest angebautes, mitrotierendes Teil (41) mit einem fest am Getriebegehäuse (2, 5 ; 8, 13) befestigten Dichtungselement (42, 43) zur Abdichtung des Getriebe-Innenraumes nach außen zusammenwirkt.

3. Kreuzgelenkverbindung nach Anspruch 1, **dadurch gekennzeichnet, daß** die getriebeseitige Gelenkgabel (19, 21) an jenem Ende der Nabe (26, 27), an dem sich die Lagerschilde (32, 33 ; 34, 35) anschließen, eine senkrecht zur Rotationsachse stehende Anlagefläche (30, 31) aufweist, an der sich die Druckplatte (28, 29) gekontert abstützt.

4. Kreuzgelenkverbindung nach Anspruch 1 oder 3, **dadurch gekennzeichnet, daß** die Druckplatte (28, 29) nach Art einer Mutter mit stirnseitigem Druckflansch ausgebildet und zur Befestigung der zweiten Gelenkgabel (19, 21) auf einen am äußeren freien Ende der Ab- bzw. Antriebswelle (7, 10) koaxial angeordneten Gewindezapfen (36) aufgeschraubt und durch geeignete Mittel, zum Beispiel eine Kontermutter, einem Splint oder Sicherungsring, gegen unerwünschtes Lösen gesichert ist.

5. Kreuzgelenkverbindung nach Anspruch 1 oder 3, **dadurch gekennzeichnet, daß** die Druckplatte (28, 29) als runde, ebene Scheibe mit zwei außermittigen, vorzugsweise gleich weit vom Zentrum entfernten Durchgangsbohrungen (37) ausgebildet ist und zur Befestigung der Gelenkgabel (19, 21) Schrauben (38) vorgesehen sind, die die Durchgangsbohrungen (37) durchdringen und in im Stirnbereich der Ab- bzw. Antriebswelle (7, 10) ausgebildete Sackgewindebohrungen eingeschraubt sowie durch geeignete Mittel, wie Sicherungsbügel oder -blech, gegen unerwünschtes Lösen gesichert sind.

6. Kreuzgelenkverbindung nach Anspruch 1, **dadurch gekennzeichnet, daß** in den beiden Lagerschilden (32, 33 bzw. 34, 35) jeder getriebeseitigen Gelenkgabel (19, 21) vor deren Bruchtrennung jeweils die Lageraugen (24) durch spanabhebende Bearbeitung und außerdem zwei zueinander parallele, durchmessermäßig abgesetzte Sacklochbohrungen (46, 47) mit innenendigen Gewindeabschnitten hergestellt werden, wobei nach dem Bruchtrennen der Lagerschilde in den Lagerdeckeln Durchgangsbohrungen gegeben sind, durch die bei Montage des vierzapfigen Zwischengliedes (22, 23) nach Ansetzen des jeweiligen Lagerdeckels an den zugehörigen Bock die zugehörigen Schrauben hindurchführbar und in die in den Böcken verbleibenden Sackgewindeabschnitte einschraubbar sind.

## Claims

1. Universal joint between a propshaft (15) and an output or drive shaft (7, 10) of a transmission (1, 8), especially one in a utility vehicle, which output or drive shaft (7, 10) is mounted in or on a transmission case (2, 9) by means of an axially-fixed roller bearing (6, 12) installed therein, which universal joint has two articulated forks (18, 19; 20, 21) and an intermediate element (22, 23) with two pairs of pins which are arranged in two mutually perpendicular axes and on which the articulated forks are swivel-mounted by means of roller bearings (25) incorporated into their bearing eyes (24), the one articulated fork (18, 20) on the side of the shaft is arranged at the end of said propshaft (15), the other articulated fork (19, 21) on the side of the transmission is attached to the end area of the output or drive shaft (7, 10) of the transmission so as to be axially locked to inhibit torsion, has a hub (26, 27) with longitudinal toothing running parallel to the axis on the inside and with bearing brackets (32, 33, 34, 35) forming an integral part thereof and is, with its hub (26, 27), mounted on the suitably-splined end section of the output or drive shaft (7, 10) in such a manner as prevent torsion, **characterized in that**
a) the articulated fork (19, 21) with its hub (26, 27) is fastened and axially-supported, by means of a pressure disk (28, 29) bolted and secured with locking nuts onto the front end of said output or drive shaft (7, 10), against the roller bearing (6, 12) supporting the output or drive shaft (7, 10) and
b) that said articulated fork (19, 21) is made of such a material and is of such a shape that each of its two bearing brackets (32, 33; 34, 35) in the area of the bearing eye (24) can be separated by being cracked into a support (321, 331; 341, 351) and a bearing cap (322, 332; 342, 352), the latter being subsequently attachable by means of two bolts (44, 45) to the associated support when the universal joint is mounted, and locked so as to be positively engaged by means of the cracked surface structures on each side.

2. Universal joint according to Claim 1, **characterized in that** the hub (26, 27) of the articulated fork (19, 21) which is on the side of the transmission and has a rotating cylindrical peripheral section (39, 40) cooperates, either directly or via a component (41) firmly mounted there and rotating with the latter, with a sealing element (42, 43) firmly attached to the transmission case (2, 5; 8, 13) for the purpose of sealing the interior of the transmission from the outside.

3. Universal joint according to Claim 1, **characterized in that**, at that end of the hub (26, 27) to which the bearing brackets (32, 33; 34, 35) are attached, the articulated fork (19, 21) on the side of the transmission has a contact face (30, 31) positioned vertically to the rotational axis and serving as a support for the pressure disk (28, 29) secured with locking nuts.

4. Universal joint according to Claim 1 or 3, **characterized in that** the pressure disk (28, 29) is provided on its front surface with a pressure flange similar to a nut, and, for the purpose of fastening the second articulated fork (19, 21), is bolted onto a coaxially-positioned threaded pin (36) at the outer free end of the output or drive shaft (7, 10) and secured against unintentional loosening by a suitable means, for example a locking nut, a split pin, or a retaining ring.

5. Universal joint according to Claim 1 or 3, **characterized in that** the pressure disk (28, 29) is designed as a circular, flat disk with two eccentric through passages (37), preferably located at equal distances from the centre, and, in order to fasten the articulated fork (19, 21), bolts (38) are provided which penetrate the through passages (37), are screwed into threaded blind holes in the front area of the output or drive shaft (7, 10) and are secured against unintentional loosening by a suitable means, such as a retaining clip or a locking plate.

6. Universal joint according to Claim 1, **characterized in that**, in the two bearing brackets (32, 33; 34, 35) of each articulated fork (19, 21) on the side of the transmission, before said brackets (32, 33; 34, 35) are separated by being cracked, each of the bearing eyes (24) is produced by means of machine-cutting and, in addition, two threaded blind holes (46, 47) located parallel to each other and with offset diameters are drilled with threaded sections terminating on the inside, and, after the bearing brackets have been separated by being cracked, through passages are provided in the bearing caps, through which, when the four-pin intermediate element (22, 23) is mounted, the associated bolts can be passed and screwed into the blind-type threaded sections remaining in the bearing supports after the bearing caps have been attached to their respective supports.

## Revendications

1. Liaison par joint de cardan entre un arbre de transmission (15) et un arbre de sortie ou d'entrée (7, 10) d'une boîte de vitesses ou d'un différentiel (1, 8), notamment d'un véhicule utilitaire, monté dans ou sur un carter (2, 9) par un roulement (6, 12) abloqué axialement, comportant deux mâchoires (18, 19 ; 20, 21) et un croisillon (22, 23) présentant deux paires de tourillons disposées sur des axes orthogonaux, sur lesquelles les mâchoires sont montées pivotantes par l'intermédiaire de coussinets (25) montés dans leurs oreilles (24), l'une des mâchoires - côté arbre - (18, 20) étant disposée à l'extrémité de l'arbre de transmission (15), l'autre mâchoire - côté boîte ou différentiel - (19, 21), elle, étant raccordée, abloquée en translation et en rotation, à l'extrémité de l'arbre de sortie ou d'entrée (7, 10) de la boîte ou du différentiel, comportant en outre un moyeu (26, 27) à cannelures intérieures parallèles à l'axe et à flasques (32, 33 ; 34, 35) venus de fonderie, et venant se monter par son moyeu (26, 27), abloquée en rotation, à l'extrémité également cannelée de l'arbre de sortie ou d'entrée (7, 10), **caractérisée en ce que** la mâchoire (19, 21)
a) est fixée par son moyeu (26, 27), au moyen d'un plateau de pression (28, 29) vissé en bout de l'arbre de sortie ou d'entrée {7, 10) et contré sur le moyeu (26, 27), en appui axial contre le roulement (6, 12) dans lequel est monté l'arbre de sortie ou d'entrée (7, 10) et
b) est fabriquée dans un matériau tel et sous une forme telle que chacun de ses deux flasques (32, 33 ; 34, 35) soit divisable au niveau de l'oreille (24), par cracking, en un support (321, 331 ; 341, 351) et un chapeau (322, 332 ; 342, 352), lequel se positionne ultérieurement, lors de l'assemblage de la liaison, par blocage, par l'intermédiaire des structures des deux faces de cassure, et se fixe au moyen de deux vis (44, 45) au support associé.

2. Liaison par joint de cardan suivant la revendication 1, **caractérisée en ce que** le moyeu (26, 27) de la mâchoire côté boîte ou différentiel (19, 21) coopère par une portion de sa surface extérieure à symétrie de rotation (39, 40), directement ou par l'intermédiaire d'une pièce solidaire en rotation qui y est rapportée à demeure (41), avec un élément d'étanchéité (42, 43) fixé à demeure sur le carter (2, 5 ; 8, 13) en vue d'assurer l'étanchéité de l'intérieur de la boîte ou du différentiel vis-à-vis de l'extérieur.

3. Liaison par joint de cardan suivant la revendication 1, **caractérisée en ce que** la mâchoire côté boîte ou différentiel (19, 21) présente à l'extrémité du moyeu (26, 27) à laquelle se raccordent les flasques (32, 33 ; 34, 35) une portée (30, 31) perpendiculaire à l'axe de rotation sur laquelle s'appuie avec contrage le plateau de pression (28, 29).

4. Liaison par joint de cardan suivant la revendication 1 ou 3, **caractérisée en ce que** le plateau de pression (28, 29) se présente à la manière d'un écrou à bride de pression en bout, se visse pour fixer la deuxième mâchoire (19, 21) sur un embout fileté (36) coaxial à l'extrémité extérieure libre de l'arbre de sortie ou d'entrée (7, 10) et est protégé contre le desserrage indésirable par des moyens appropriés, tels que contre-écrou, goupille ou circlip.

5. Liaison par joint de cardan suivant la revendication 1 ou 3, **caractérisée en ce que** le plateau de pression (28, 29) se présente sous forme de disque plan et rond comportant deux trous débouchants excentrés (37), de préférence équidistants du centre, et que, pour fixer les mâchoires (19, 21), sont prévues des vis (38) qui traversent les trous débouchants (37), se vissent dans des trous borgnes taraudés en bout de l'arbre de sortie ou d'entrée (7, 10) et sont freinées par des moyens appropriés, tels qu'étrier ou frein à languettes.

6. Liaison par joint de cardan suivant la revendication 1, **caractérisée en ce que** dans les deux flasques (32, 33 ; 34, 35) de chaque mâchoire côté boîte ou différentiel (19, 21), avant leur cracking, sont usinées les oreilles (24) et pratiqués deux trous borgnes parallèles entre eux, étagés en diamètre (46, 47) et terminés à l'intérieur par une portion taraudée, le cracking des flasques donnant naissance dans les chapeaux à des trous débouchants par lesquels il est possible, lors du montage du croisillon à quatre tourillons (22, 23), après avoir posé le chapeau considéré sur le support associé, de faire passer les vis associées et de les visser dans les portions taraudées des trous borgnes restant dans les supports.
